# FASCICULE DE BREVET EUROPEEN

(11) **EP 4 082 356 B1**
(45) Date de publication et mention de la délivrance du brevet: **06.12.2023**
(21) Numéro de dépôt: 21170840.9
(22) Date de dépôt: 28.04.2021
(51) Int. Cl.: A23L 2/56, C12F 3/06, C12G 3/06

(54) **MÉTHODE DE TRAITEMENT DE RAFLES À L'ÉTAT VÉGÉTAL, NON-LIGNIFIÉES, ET LEUR UTILISATION**
METHODE ZUR BEHANDLUNG VON NICHT VERHOLZTEN TRAUBENSTIELEN IM PFLANZISCHEN ZUSTAND UND DEREN VERWENDUNG
METHOD OF TREATMENT OF NON-LIGNIFIED GRAPE STALKS IN THE PLANT STATE AND THEIR USE

(43) Date de publication de la demande: 02.11.2022
(73) Titulaire: Torevitis SA, 1077 Servion (CH)
(72) Inventeur: Chantreuil, Grégoire, 1005 Lausanne (CH); de Pontbriand, Cédric, 1077 Servion (CH)
(74) Mandataire: Ganguillet, Cyril

(56) Documents cités:
- WO-A1-2015/140419
- FR-A1- 2 995 909
- FR-A1- 3 055 555

## Description

### Domaine technique

La présente invention se rapporte à une méthode de traitement de rafles, plus particulièrement de rafles à l'état végétal et à une utilisation des rafles ainsi traitées, ou d'un extrait desdites rafles traitées, notamment dans des solutions aqueuses ou hydroalcooliques, des boissons, ou des boissons alcoolisées. L'invention concerne également un procédé d'obtention d'un extrait de rafles à partir des rafles traitées et une composition comprenant au moins un tel extrait de rafles.

### Etat de la technique

Après la vendange et avant d'être pressé, le raisin récolté subit une étape d'égrappage ou d'éraflage pour enlever les rafles, la partie végétale, et le pédoncule de la grappe afin d'éviter d'apporter au vin des goûts herbacés, végétaux, astringents et amers qui sont préjudiciables à la maturation et l'affinement du vin lors de cuvaison longue. Bien que certaines études ont montré que la présence de rafles dans la macération peut avoir un effet bénéfique dans le processus de fermentation du moût, les rafles, et en particulier les rafles vertes ou non-lignifiées sont souvent considérées comme des déchets et sont éliminées. Elles seraient responsables de la modification de la composition du vin en lui apportant beaucoup d'eau et peu de sucre. Elles seraient aussi responsables de modifications de l'aspect visuel du vin, telle qu'une décoloration. Même lorsque des rafles vertes ou à l'état végétal sont traitées à la vapeur pour extraire certains composants, celles-ci libèrent des composés qui ont tendance à procurer au vin ces goûts herbacés et amers.

Diverses recherches ont été menées pour valoriser ces déchets dans la vinification, comme amendement organique pour la viticulture, dans la cosmétique, comme compléments et produits nutritionnels pour l'industrie alimentaire. Dans ce but, le groupe de Piermettei (B. Piermattei et al., "Studi preliminari sull'impiego di raspi essiccali nell vinificazione in ross", Rivista di Viticoltura di enologia, Scarpi, Treviso, IT, Vol. 52, No. 4, (1999), pp 23-31) a étudié la manière d'utiliser des rafles dans la fabrication de vin rouge tout en limitant les effets négatifs d'un tel ajout. Cette étude conclut que l'utilisation du matériel sec et lignifié doit être privilégié par rapport à l'utilisation de rafles vertes ou à l'état végétal. La macération de rafles séchées et lignifiées permet une plus grande stabilité de la couleur rouge pendant la conservation du vin et une augmentation de certains composés polyphénols qui pourraient favoriser l'évolution des vins dans une phase ultérieure de vieillissement. Ainsi l'application d'une phase de lignification aux rafles vertes ou à l'état végétal avant d'être introduites dans le vin est nécessaire non seulement pour éviter les effets négatifs sur le goût du vin mais aussi pour favoriser sa vinification et son vieillissement. Une autre publication (WO 2015/140419 A1) décrit une méthode de valorisation des rafles vertes ou à l'état végétal qui doivent être préalablement lignifiées par dessication avant d'être utilisées entières, en extrait ou en poudre comme aromatisant, exhausteur, agent de saveur dans des boissons ou aliments. Selon cette publication, il est important que les rafles subissent une phase de lignification en les soumettant à une dessication naturelle pendant 1 à 5 semaines. Ce traitement accélère la transformation en bois des membranes de certaines cellules végétales des rafles sous l'action de la lignine. Puis, selon cette méthode de valorisation, les rafles lignifiées et de préférence triées pour ne conserver que les parties ligneuses sont soumises à une étape de chauffe à la manière du bois de barrique. Les rafles sont torréfiées ou toastées pour moduler les propriétés olfactives et gustatives du bois des rafles lignifiées en fonction de la température et de la durée de la chauffe. Ainsi cette méthode de valorisation de rafles vertes ou à l'état végétal est en fait une méthode de valorisation de rafles lignifiées. Elle s'apparente à une méthode d'utilisation de bois de barrique qui consiste à introduire du bois (copeaux) chauffé et torréfié dans le vin lors de son élevage en cuve pour l'aromatiser.

Cependant, procéder à une étape de lignification des rafles ou d'aoûtement des rafles avant leur utilisation entraîne une dégradation et une oxydation des composés organiques (tanins et resvératrol, par exemple) contenus dans les rafles vertes et fraîches ainsi qu'une altération et un changement du pH de la matière, l'élimination de tanins et un appauvrissement de la complexité aromatique du produit final obtenu. De plus, le vin provenant de la vinification avec l'ajout des rafle lignifiées et torréfiées ne contient pas que des arômes et tanins propre au cépage vinifié mais aussi ceux d'un bois de chauffe. Dans ce cas le vin est gustativement modifié avec des arômes et tanins propres au bois et à sa chauffe car il ne s'agit ni plus ni moins d'une torréfaction de bois comme cela se fait en tonnellerie. En outre, l'étape de torréfaction peut conduire à l'apparition d'acrylamide, composé cancérigène, dans des extraits de rafles traitées à haute température. De plus l'étape de dessication naturelle pour lignifier des rafles vertes ou fraîches nécessite une logistique non négligeable en termes de coûts, d'aménagements et de stockage de la matière première, qui se répercute sur le prix du produit final.

### Résumé de l'invention

Le but de la présente invention est de pallier les inconvénients et désavantages susmentionnés dans la valorisation des rafles vertes et fraîches, donc non-lignifiées. Plus particulièrement, le but de l'invention est la valorisation de rafles à l'état végétal pour leur utilisation comme additif alimentaire ou cosmétique en préservant les molécules aromatiques et structurelles d'intérêt propres au cépage vinifié. Ainsi des arômes, acides, stilbènes et tanins, entre autres, sont gardés au maximum sous leur forme réduite et non-oxydée. Il est aussi un objectif de proposer un traitement adéquat des rafles non-lignifiées qui ne produit pas l'apparition d'acrylamide ou autre substance cancérigène dans celles-ci.

A cet effet, la présente invention propose une méthode de traitement des rafles à l'état végétal, à savoir de rafles non-lignifiées, notamment pour leur utilisation comme additif alimentaire ou cosmétique comprenant au moins une étape de torréfaction des rafles à une température comprise entre 80°C et 150°C pendant une période comprise entre 5 et 20 minutes; et au moins une étape de refroidissement des rafles torréfiées à une température comprise entre 4° et 25°C.

Les rafles à l'état végétal sont préférablement soumises à la torréfaction quelques heures seulement après la vendange, en particulier moins d'une dizaine d'heures après vendange. Ce laps de temps peut en particulier être de moins de 4 heures, encore plus préférablement moins de 2 heures après la vendange.

Selon un mode de mise en oeuvre de l'invention, l'étape de torréfaction des rafles à l'état végétal suivie de l'étape de refroidissement desdites rafles une fois torréfiées forment un cycle de traitement qui est répété à plusieurs reprises, préférablement 2 à 5 fois.

Préférablement, l'air est constamment renouvelé lors de l'étape de torréfaction.

Par ailleurs, l'étape de torréfaction est préférablement effectuée à une humidité relative environnante comprise entre 20 et 80%.

Lors de la torréfaction, l'on assure en outre préférablement que la température des rafles n'excède pas 120°C.

Dans un mode de réalisation préféré, la température lors de la torréfaction augmente en palier.

Ainsi, les présents inventeurs ont constaté que des rafles à l'état végétal soumises à au moins un cycle de traitement incluant une torréfaction relativement brève à basse température suivie d'un refroidissement des rafles torréfiées permet une désamérisation de la matière, en l'occurrence des rafles à l'état végétal, tout en préservant leurs propriétés bénéfiques. Les rafles traitées selon la méthode de l'invention ne procurent pas de goûts herbacés et amers propre à l'état végétal de la matière. Cette désamérisation a été montrée par la dégustation d'eau dans laquelle des rafles traitées y avaient été mises à macérer et infuser. Seul des arômes complexes ont été mis en évidence. Aucun goût herbacé et amer n'a été ressenti. Ce traitement rend les rafles à l'état végétal adéquates à une macération dans le moût ou le vin en début de vinification tout en permettant d'apporter des tanins et arômes de rafles propres aux rafles à l'état végétal qui ne s'apparentent pas à ceux du bois de chauffe ou de tonnellerie. Il permet en plus de préserver des molécules considérées antioxydantes comme les stilbènes ou polyphénols et qui sont contenues dans les rafles non-lignifiées.

La présente invention propose aussi un procédé d'obtention d'un extrait de rafles comprenant la soumission des rafles traitées, obtenues selon la méthode de traitement de l'invention, à au moins une étape d'extraction aqueuse desdites rafles traitées afin de produire ledit extrait de rafles.

Préférablement, le procédé d'obtention de l'extrait de rafles par extraction aqueuse comprend au moins une étape de solubilisation dans l'eau, dans une solution hydroalcoolique ou dans une solution alcoolique desdites rafles traitées.

Avantageusement, ce procédé d'obtention de l'extrait de rafles par extraction aqueuse comprend au moins une étape d'infusion desdites rafles traitées.

Selon une autre variante, il est proposé un procédé d'obtention d'un extrait de rafles comprenant la soumission des rafles traitées, obtenues selon la méthode de traitement de l'invention, à au moins une étape d'hydrolyse en milieu acide ou basique ou en présence d'enzyme desdites rafles traitées afin de produire ledit extrait de rafles.

Selon encore une autre variante, il est proposé un procédé d'obtention d'un extrait de rafles comprenant la soumission de rafles traitées, obtenues selon la méthode de traitement de l'invention, à au moins une étape d'infusion ou de macération dans l'huile desdites rafles traitées afin de produire ledit extrait de rafles.

Un autre objet de l'invention concerne une composition comprenant au moins un extrait de rafles obtenu selon l'un ou l'autre des procédés d'obtention susmentionnés.

Un autre objet de la présente invention concerne l'utilisation de rafles traitées, obtenues selon la méthode de traitement de l'invention, d'un extrait de rafles obtenu selon l'un des procédés d'obtention de l'invention ou d'une composition contenant ledit extrait de rafles, comme additif alimentaire, exhausteur, aromatisant ou complément alimentaire dans des boissons ou des aliments.

Préférablement, leur utilisation comme additif alimentaire, exhausteur, aromatisant ou complément alimentaire dans des boissons ou des aliments est mise en oeuvre dans le cadre d'une méthode de vinification ou d'élevage d'un vin.

D'autres caractéristiques et avantages de la présente invention sont indiqués dans les revendications dépendantes et seront mieux compris à la lecture de la description détaillée de modes de réalisations préférables de l'invention.

### Description détaillée de l'invention

Dans la présente demande, le terme "rafle" définit la grappe de raisin dépourvue de ses fruits, incluant indifféremment la rafle entière comme des morceaux de rafles ou des parties de rafles comme le pédoncule, le pédicelle ou le pinceau.

Pour la présente invention, les termes "rafle à l'état végétal", "rafle non-lignifiée", ou "rafle verte" définissent la rafle fraîche ou fraîchement récoltée au moment de la vendange, à savoir la rafle non-lignifiée. Elle est de couleur verte et a un aspect de végétal. Cette désignation de la rafle est faite par opposition à une rafle qualifiée de "lignifiée", c'est-à-dire un état de la rafle dans lequel elle a pris l'aspect et la rigidité du bois et une couleur marron due au processus de lignification par lequel les membranes de certaines cellules végétales se transforment en bois sous l'action de la lignine. La rafle "lignifiée" est souvent obtenue par dessèchement naturel pendant 1 à plusieurs semaines ou artificiel par une torréfaction ou cuisson à haute température et dans un milieu sec avec une possible humidité résiduelle.

L'invention concerne un procédé de transformation de l'état végétal des rafles vertes pour les désamériser au moyen d'une méthode de traitement incluant un ou plusieurs cycles comprenant une étape de torréfaction relativement brève à basse température et une étape de refroidissement des rafles torréfiées.

Sous l'action des réactions de Maillard dues à la torréfaction, les rafles à l'état végétal se transforment, se rigidifient et perdent en élasticité et brunissent. Cependant les rafles traitées doivent rester souples et présenter une certaine élasticité. Cette élasticité résiduelle de la rafle traitée témoigne de la présence de sève, d'eau et d'humidité et l'absence d'une lignification traduite par une rigidité de la rafle comparable à du bois et de sa couleur marron à brun foncé.

Par l'application de cette méthode de traitement, les rafles traitées, un extrait de celle-ci ou une composition en contenant ne procurent plus de goûts herbacés et amers au milieu ou liquide dans lequel elles y sont mis à macérer ou infuser et sont propres à une utilisation comme additif alimentaire ou cosmétique.

Selon un aspect de l'invention, les rafles à l'état végétal sont soumises à une méthode de traitement pour les utiliser notamment comme additif alimentaire ou cosmétique qui comprend au moins une étape de torréfaction des rafles à une température comprise entre 80°C et 150°C pendant une période comprise entre 5 et 20 minutes; et au moins une étape de refroidissement des rafles torréfiées à une température comprise entre 4° et 25°C.

A l'issu de la vendange, les rafles vertes doivent être protégées du dessèchement pour garder leur humidité et de la lumière pour limiter l'altération de leurs composés (sucres, tanins, acides aminés, p.ex.). La présence en infime quantité de composés soufrés sur les rafles fraîches peut aussi contribuer à préserver ces composés de l'oxydation. La présence de ces composés soufrés provient du mode de culture et du traitement de la vigne. L'utilisation d'autres antioxydants, comme de l'acide ascorbique, peut aussi contribuer à améliorer la préservation des rafles et le traitement de celles-ci. Avantageusement, pour retarder le processus de lignification et prolonger la préservation des rafles à l'état végétal, celles-ci peuvent être soumises à une étape de préservation par l'utilisation ou l'application d'un antioxydant ou d'une composition comprenant un antioxydant avant la mise en oeuvre de la méthode de traitement de l'invention.

Une fois récoltées et/ou triées à l'issu de la vendange pour éviter la présence d'autres structures (peau de raisin, pépins, p. ex.) que celles de la rafle proprement dite, les rafles à l'état végétal peuvent être débarrassées de leur impureté par rinçage avec de l'eau ou par lavage dans un ou plusieurs bains contenant de l'eau dont la température ne dépassera pas 25°C.

Avantageusement, les rafles à l'état végétal sont gardées entières. Les morceaux et les parties de rafles, qui sont coupés ou s'en détachent, peuvent être traités à part ou joints au lot de rafles à l'état végétal entières à traiter.

Le laps de temps entre la vendange et l'éraflage de la grappe pour récolter les rafles encore vertes doit être le plus court possible afin de préserver de la dégradation le plus grand nombre de tanins et autres composés d'intérêt contenus dans les rafles à l'état végétal.

Les rafles récoltées au moment de la vendange sont donc soumises à la méthode de traitement le plus rapidement possible, préférablement quelques heures seulement après la vendange, en particulier moins d'une dizaine d'heures après la vendange. Ce laps de temps peut en particulier être de moins de 4 heures, plus préférablement encore de moins de 2 heures après la vendange. Les rafles à l'état végétal récoltées sont gardées jusqu'à leur traitement à une température se situant entre 4° et 25°C, préférablement entre 5° et 12°C. La réfrigération peut être un moyen pour préserver l'état végétal des rafles jusqu'au moment de leur traitement par la méthode de l'invention. Avantageusement, les rafles gardées à température ambiante ou à une température supérieure à 12°C sont soumises à la méthode de traitement après la vendange dans un laps de temps n'excédant pas 45 minutes, préférablement n'excédant pas 20 minutes.

Selon un mode de réalisation de la méthode de traitement, l'étape de torréfaction des rafles à l'état végétal suivie de l'étape de refroidissement desdites rafles une fois torréfiées forment un cycle de traitement qui est répété à plusieurs reprises, préférablement 2 à 5 fois, plus préférablement 3 fois. Bien que dépendant de la taille et de l'épaisseur des rafles non-lignifiées, le nombre de répétitions d'un cycle de traitement ne doit pas résulter en une lignification artificielle des rafles traitées. Le cycle de traitement et leur répétition peuvent être effectués dans un four, p.ex., ou tout autre dispositif qui permet un réglage et un contrôle de la température et de l'humidité relative dans celui-ci (humidité relative environnante) ainsi que la montée en palier de la température.

Pendant l'étape de torréfaction, la température des rafles ne doit idéalement pas excéder 120°C afin d'éviter la génération d'acrylamide pendant la chauffe et les réactions de Maillard. La température à laquelle s'effectue la torréfaction dans le four ou le dispositif est comprise entre 80° et 150°C, préférablement entre 80° et 120°C. Si la température de torréfaction est effectuée à plus de 120°C, l'on veillera à assurer que la température des rafles en tant que telles ne dépasse pas le seuil de 120°C susmentionné. Avantageusement, la température lors de la torréfaction augmente en palier. Plus particulièrement, la température de torréfaction augmente d'un cycle de traitement à un autre. Par exemple, l'étape de torréfaction dans un premier cycle peut être effectuée à basse température, p.ex. aux environs de 80°C puis elle est augmentée par palier de 30°C environ dans les cycles suivants, atteignant au troisième cycle une température n'excédant pas 150°C. Avantageusement le palier d'augmentation de la température de torréfaction d'un cycle à un autre est compris entre 10° et 30°C.

L'étape de torréfaction pendant laquelle les rafles sont soumises aux réactions de Maillard, de caramélisation et de Stecker, doit être courte pour préserver les tanins et sucres d'une carbonisation au lieu d'une glycation et d'une caramélisation et pour limiter voire éviter l'apparition d'acrylamide. La durée de l'étape de torréfaction n'excède ainsi pas 20 minutes. Préférablement elle est comprise entre 5 et 20 minutes, encore plus préférablement entre 5 et 10 minutes.

L'étape de torréfaction s'apparente à une cuisson à sec dans un milieu où l'air est renouvelé préférablement de manière constante. Cependant, il est important de conserver une certaine humidité dans le four ou le dispositif pour torréfier aussi bien que dans les rafles traitées.

De façon avantageuse, l'étape de torréfaction est effectuée à une humidité relative environnante comprise entre 20 et 80% dans le four ou le dispositif pour torréfier. Les rafles traitées, obtenues par la méthode de traitement gardent une humidité résiduelle, dont le taux peut varier. Il est généralement admis que les rafles traitées, obtenues par la méthode de traitement ont un taux d'humidité compris entre 5 et 45 %.

L'étape de refroidissement des rafles non-lignifiées et torréfiées s'effectue à une température comprise entre 4° et 25°C, préférablement entre 10° et 12°C, dans le four ou dans le dispositif pour torréfier ou dans un autre dispositif dans lequel la température peut être diminuée de manière contrôlée. Pendant cette étape, selon un mode de réalisation préféré, la température des rafles torréfiées est diminuée à une température comprise entre 10° et 12°C. Cette étape de refroidissement dure entre 5 et 15 minutes, préférablement entre 8 et 12 minutes.

Les courtes durées des étapes de torréfaction à basse température et de refroidissement combinées à leur alternance permettent la transformation de l'état végétal de la rafle en une forme contenant des arômes et tanins restructurés proches de ceux qui peuvent se trouver dans une rafle à l'état végétal sans l'amertume du végétal et qui sont très différents des arômes donnés par du bois de chauffe ou tonnellerie ou des rafles lignifiées et toastées ou torréfiées. De plus la présence d'acrylamide est limitée voir évitée.

A l'issue du traitement de désamérisation, les rafles traitées, obtenues par la méthode de traitement sont refroidies et/ou stockées en chambre froide. Elles sont soit laissées entières, coupées en morceaux, broyées ou réduites en poudre. Avantageusement, les rafles traitées et refroidies peuvent être gardées entières lors de leur utilisation, en particulier lorsque leurs qualités aromatiques, pouvant témoigner d'un terroir particulier, sont recherchées. Elles peuvent être aussi incorporées dans une composition comme ingrédient ou comme principe actif. Elles peuvent être conditionnées sous vide pour une conservation optimale des arômes et tanins contenus dans celles-ci. Les rafles ainsi traitées sont avantageusement stockées à l'abri de la lumière et à une température inférieure à 15°C, préférablement entre 4° et 12°C, et de préférence protégées de l'oxydation.

Un autre aspect de l'invention est un procédé d'obtention d'un extrait de rafles soumettant les rafles traitées, obtenues par la méthode de l'invention, à une étape d'extraction aqueuse, à une étape d'hydrolyse en milieu acide ou basique ou en présence d'enzyme, ou à une étape d'infusion ou de macération dans l'huile afin de produire ledit extrait de rafles.

Selon une première variante, le procédé comprend au moins une étape d'extraction aqueuse. Préférablement, le procédé d'extraction aqueuse comprend au moins une étape de solubilisation dans l'eau, dans une solution hydroalcoolique ou dans une solution alcoolique desdites rafles traitées. Avantageusement, le procédé d'extraction aqueuse comprend au moins une étape d'infusion des rafles traitées.

Schématiquement, l'extraction aqueuse peut consister en la macération dans un liquide des rafles traitées, obtenues selon la méthode de traitement, et sont enlevées du liquide après une certaine durée. Cette durée dépend de la solubilisation dans le liquide des tanins, molécules aromatiques, phénols et autres composés recherchés.

Selon une autre variante, le procédé comprend au moins une étape d'hydrolyse en milieu acide ou basique ou en présence d'enzyme desdites rafles traitées.

Selon un autre mode de réalisation, le procédé d'obtention d'extrait de rafles comprend au moins une étape d'infusion ou de macération dans l'huile des rafles traitées. Ce type de macération permet d'extraire des composés organiques et organoleptiques lipophiles qui ne sont pas solubles dans un liquide ou un milieu aqueux.

L'extrait de rafles obtenu par l'un des modes de réalisation du procédé d'obtention peut être incorporé dans une composition. Il peut en être un ingrédient ou un principe actif.

Les rafles traitées, obtenues par la méthode de désamérisation, leur extrait ou des compositions contenant un tel extrait peuvent être utilisés comme additif alimentaire, exhausteur, aromatisant ou complément alimentaire dans des boissons ou des aliments.

Avantageusement, leur utilisation comme additif alimentaire, exhausteur, aromatisant ou complément alimentaire dans des boissons ou des aliments peut être mise en oeuvre dans une méthode de vinification ou d'élevage d'un vin.

Chaque cépage dévoile des précurseurs aromatiques différents qui peuvent être des marqueurs d'un terroir particulier. Ainsi des rafles à l'état végétal d'un cépage particulier et traitées selon la méthode de l'invention peuvent servir à nuancer ou renforcer la complexité organoleptique d'un moût ou d'un vin fait à partir du raisin de ce cépage et de la même année ou du même millésime. La conservation et la stabilité des organoleptiques contenus dans les rafles traitées selon la méthode de l'invention sont relativement de courtes durées et ne permet pas d'utiliser les rafles d'une année particulière traitées selon la méthode dans un vin d'un autre millésime pour l'améliorer. L'avantage est de garder une authenticité organoleptique proche des rafles à l'état végétal d'un cépage particulier sans les amertumes. Cette authenticité ne peut être assurée par l'utilisation de rafles lignifiées et toastées dont la complexité organoleptique est basée sur la modulation des températures de chauffe du bois et n'est guère due au type de cépage. De plus les rafles lignifiée et toastées peuvent être utilisées pour d'autres millésimes aussi bien que d'autres cépages pour en améliorer la qualité gustative.

Selon un mode de réalisation, la méthode de vinification comporte au moins une étape de macération des rafles traitées selon la méthode de l'invention. Lesdites rafles sont introduites indépendamment des phases de l'évolution et de fermentation du vin. Ainsi la macération des rafles traitées peut s'effectuer au début de l'introduction de la vendange en cuve, ou pendant la phase de fermentation alcoolique et/ou la phase de fermentation malolactique. La macération des rafles traitées peut aussi être réalisée à l'issue de ces phases de fermentations, et même après la mise en barrique. La durée de macération des rafles non-lignifiées et traitées selon la méthode de l'invention ainsi que leur concentration sont ajustées en fonction des propriétés organoleptiques recherchées. Il peut être envisageable d'utiliser un extrait de rafles traitées sous forme de lyophilisat, p.ex. au lieu de macérer des rafles traitées et de l'incorporer dans la méthode de vinification ou d'élevage d'un vin indépendamment des phases de l'évolution et de fermentation du vin.

Selon un autre mode de réalisation, les rafles traitées selon la méthode de l'invention, un extrait de rafles traités ou une composition sont macérés, infusés ou incorporés dans un liquide, de l'eau ou une boisson alcoolisée ou non afin de les aromatiser. Ainsi, une eau minérale peut être aromatisée par un extrait ou un macérat desdites rafles traitées pour lui donner un goût et des arômes proches de ceux d'un vin provenant d'un cépage particulier. A titre d'exemple, il est aussi possible d'aromatiser un alcool fort, une boisson alcoolisée ayant un degré d'alcool supérieur à 18°, comme du gin ou du whisky par l'incorporation d'un extrait desdites rafles traitées qui sera utilisé pour ses propriétés organoleptiques et/ou comme exhausteur.

La méthode de traitement ou désamérisation des rafles à l'état végétal permet de conserver les propriétés nutritionnelles (sucres, tanins, acides aminés et polyphénols) de celles-ci. Les rafles traitées selon la méthode de l'invention sous forme d'extrait ou d'une composition peuvent être ajoutées à un aliment ou un produit alimentaire pour l'aromatiser et l'enrichir sur un plan aussi bien gustatif que nutritionnel. Les rafles ainsi traitées sous forme d'extrait ou d'une composition peuvent être utilisées comme principe actif nutritionnel dans un complément alimentaire ou un produit nutritionnel.

La méthode de traitement de l'invention permet aussi la conservation des propriétés antioxydantes des polyphénols et des nutriments des rafles traitées. Parmi d'autres utilisations possibles, un extrait de rafles obtenu par un macérat huileux desdites rafles traitées, ou une composition en contenant peuvent être utilisés comme principe actif dans une composition cosmétique, plus particulièrement destinée aux soins de la peau. Il est même envisageable d'utiliser des rafles traitées en poudre comme principe actif dans une composition cosmétique, p.ex. dans la mise en oeuvre d'une méthode de peeling.

## Revendications

1. Une méthode de traitement de rafles à l'état végétal, à savoir des rafles non-lignifiées, notamment pour leur utilisation comme additif alimentaire ou cosmétique, comprenant:
- au moins une étape de torréfaction des rafles à une température comprise entre 80°C et 150°C pendant une période comprise entre 5 et 20 minutes; et
- au moins une étape de refroidissement des rafles torréfiées à une température comprise entre 4° et 25°C.

2. La méthode de traitement selon la revendication 1, **caractérisée en ce que** les rafles à l'état végétal sont soumises à la torréfaction quelques heures seulement après la vendange, en particulier moins d'une dizaine d'heures après la vendange, préférablement moins de 4 heures après la vendange, encore plus préférablement moins de 2 heures après la vendange.

3. La méthode de traitement selon l'une quelconque des revendications précédentes, **caractérisée en ce que** l'étape de torréfaction suivie de l'étape de refroidissement forment un cycle de traitement, qui est répété à plusieurs reprises, préférablement 2 à 5 fois.

4. La méthode de traitement selon l'une quelconque des revendications précédentes, **caractérisée en ce que** l'étape de torréfaction est soumise à un renouvellement constant de l'air.

5. La méthode de traitement selon l'une quelconque des revendications précédentes, **caractérisée en ce que** l'étape de torréfaction est effectuée à une humidité relative environnante comprise entre 20 et 80%.

6. La méthode de traitement selon l'une quelconque des revendications précédentes, **caractérisée en ce que** la température des rafles lors de la torréfaction n'excède pas 120°C.

7. La méthode de traitement selon l'une quelconque des revendications précédentes, **caractérisée en ce que** la température lors de la torréfaction augmente en palier.

8. Procédé d'obtention d'un extrait de rafles, **caractérisé en ce qu'**il comprend la soumission de rafles traitées, obtenues selon la méthode de traitement de l'une quelconque des revendications 1 à 7, à au moins une étape d'extraction aqueuse desdites rafles traitées afin de produire ledit extrait de rafles.

9. Procédé d'obtention selon la revendication 8, **caractérisé en ce que** le procédé comprend au moins une étape de solubilisation dans l'eau, dans une solution hydroalcoolique ou dans une solution alcoolique desdites rafles traitées.

10. Procédé d'obtention selon la revendication 8 ou 9, **caractérisé en ce que** le procédé comprend au moins une étape d'infusion desdites rafles traitées.

11. Procédé d'obtention d'un extrait de rafles, **caractérisé en ce qu'**il comprend la soumission de rafles traitées, obtenues selon la méthode de traitement de l'une quelconque des revendications 1 à 7, à au moins une étape d'hydrolyse en milieu acide ou basique ou en présence d'enzyme desdites rafles traitées afin de produire ledit extrait de rafles.

12. Procédé d'obtention d'un extrait de rafles, **caractérisé en ce qu'**il comprend la soumission de rafles traitées, obtenues selon la méthode de traitement de l'une quelconque des revendications 1 à 7, à au moins une étape d'infusion ou de macération dans l'huile desdites rafles traitées afin de produire ledit extrait de rafles.

13. Composition comprenant au moins un extrait de rafles obtenu selon le procédé d'obtention de l'une quelconque des revendications 8 à 12.

14. Utilisation de rafles traitées, obtenues selon la méthode de traitement de l'une quelconque des revendications 1 à 7, d'un extrait rafles obtenu selon le procédé de l'une quelconque des revendications 8 à 12 ou d'une composition selon la revendication 13 comme additif alimentaire, exhausteur, aromatisant ou complément alimentaire dans des boissons ou des aliments.

15. Utilisation selon la revendication 14 mise en oeuvre dans le cadre d'une méthode de vinification ou d'élevage d'un vin.

## Patentansprüche

1. Methode zur Behandlung von Traubenstielen im pflanzischen Zustand, d. h. nicht verholzten Traubenstielen, insbesondere zu ihrer Verwendung als Nahrungsmittel- oder Kosmetikzusatzstoff, umfassend:
- mindestens einen Schritt des Röstens der Traubenstielen bei einer Temperatur zwischen 80 °C und 150 °C während eines Zeitraums zwischen 5 und 20 Minuten; und
- mindestens einen Schritt des Abkühlens der gerösteten Traubenstielen auf eine Temperatur zwischen 4 und 25 °C.

2. Methode zur Behandlung nach Anspruch 1, **dadurch gekennzeichnet, dass** die Traubenstielen im pflanzischen Zustand dem Rösten nur wenige Stunden nach der Traubenlese, insbesondere weniger als etwa zehn Stunden nach der Lese, bevorzugt weniger als 4 Stunden nach der Traubenlese, noch bevorzugter weniger als 2 Stunden nach der Traubenlese unterzogen werden.

3. Methode zur Behandlung nach einem der vorhergehenden Ansprüche, **dadurch gekennzeichnet, dass** der Schritt des Röstens gefolgt von dem Schritt des Abkühlens einen Behandlungszyklus bilden, der mehrmals, bevorzugt 2 bis 5 Mal, wiederholt wird.

4. Methode zur Behandlung nach einem der vorhergehenden Ansprüche, **dadurch gekennzeichnet, dass** der Schritt des Röstens einer ständigen Erneuerung der Luft unterzogen wird.

5. Methode zur Behandlung nach einem der vorhergehenden Ansprüche, **dadurch gekennzeichnet, dass** der Schritt des Röstens bei einer relativen Umgebungsfeuchte zwischen 20 und 80 % durchgeführt wird.

6. Methode zur Behandlung nach einem der vorhergehenden Ansprüche, **dadurch gekennzeichnet, dass** die Temperatur der Rappen beim Rösten 120 °C nicht übersteigt.

7. Methode zur Behandlung nach einem der vorhergehenden Ansprüche, **dadurch gekennzeichnet, dass** die Temperatur beim Rösten stufenweise steigt.

8. Verfahren zum Erhalten eines Extrakts aus Traubenstielen, **dadurch gekennzeichnet, dass** es das Unterziehen von behandelten Traubenstielen, die nach der Methode zur Behandlung nach einem der Ansprüche 1 bis 7 erhalten werden, mindestens einem Schritt der wässrigen Extraktion der behandelten Traubenstielen umfasst, um den Extrakt aus Traubenstielen herzustellen.

9. Verfahren zum Erhalten nach Anspruch 8, **dadurch gekennzeichnet, dass** das Verfahren mindestens einen Schritt der Solubilisierung der behandelten Traubenstielen in Wasser, in einer wässrig-alkoholischen Lösung oder in einer alkoholischen Lösung umfasst.

10. Verfahren zum Erhalten nach Anspruch 8 oder 9, **dadurch gekennzeichnet, dass** das Verfahren mindestens einen Schritt des Aufgießens der behandelten Traubenstielen umfasst.

11. Verfahren zum Erhalten eines Extrakts aus Traubenstielen, **dadurch gekennzeichnet, dass** es das Unterziehen von behandelten Traubenstielen, die nach der Methode zur Behandlung nach einem der Ansprüche 1 bis 7 erhalten werden, mindestens einem Schritt der Hydrolyse im sauren oder basischen Milieu oder in Gegenwart von Enzym der behandelten Traubenstielen umfasst, um den Extrakt aus Traubenstielen herzustellen.

12. Verfahren zum Erhalten eines Extrakts aus Traubenstielen, **dadurch gekennzeichnet, dass** es das Unterziehen von behandelten Traubenstielen, die nach der Methode zur Behandlung nach einem der Ansprüche 1 bis 7 erhalten werden, mindestens einem Schritt des Aufgießens oder des Mazerierens in Öl der behandelten Traubenstielen umfasst, um den Extrakt aus Traubenstielen herzustellen.

13. Zusammensetzung, umfassend mindestens einen Extrakt aus Traubenstielen, der nach dem Verfahren zum Erhalten nach einem der Ansprüche 8 bis 12 erhalten wird.

14. Verwendung von behandelten Traubenstielen, die nach der Methode zur Behandlung nach einem der Ansprüche 1 bis 7 erhalten werden, eines Extrakts aus Traubenstielen, der nach dem Verfahren nach einem der Ansprüche 8 bis 12 erhalten wird, oder einer Zusammensetzung nach Anspruch 13 als Nahrungsmittelzusatzstoff, Geschmacksverstärker, Aromastoff oder Nahrungsergänzungsmittel in Getränken oder Nahrungsmitteln.

15. Verwendung nach Anspruch 14, die im Rahmen einer Methode zur Weinbereitung oder zum Ausbau eines Weins eingesetzt wird.

## Claims

1. A method of treatment of grape stalks in the plant state, namely non-lignified stalks, in particular for use thereof as food additive or cosmetic additive, comprising:
- at least one step of roasting the grape stalks at a temperature between 80°C and 150°C for a time between 5 and 20 minutes; and
- at least one step of cooling the roasted grape stalks to a temperature between 4 and 25°C.

2. The method of treatment according to Claim 1, **characterized in that** the grape stalks in the plant state are submitted to roasting just a few hours after the grape harvest, in particular less than about ten hours after grape-harvesting, preferably less than 4 hours after the grape harvest, even more preferably less than 2 hours after the grape harvest.

3. The method of treatment according to any one of the preceding claims, **characterized in that** the roasting step followed by the cooling step forms a treatment cycle, which is repeated several times, preferably 2 to 5 times.

4. The method of treatment according to any one of the preceding claims, **characterized in that** there is constant renewal of the air in the roasting step.

5. The method of treatment according to any one of the preceding claims, **characterized in that** the roasting step is carried out at an ambient relative humidity between 20 and 80%.

6. The method of treatment according to any one of the preceding claims, **characterized in that** the temperature of the grape stalks during roasting does not exceed 120°C.

7. The method of treatment according to any one of the preceding claims, **characterized in that** the temperature during roasting increases in stages.

8. Process for obtaining an extract of grape stalks, **characterized in that** it comprises submitting treated grape stalks, obtained according to the method of treatment of any one of claims 1 to 7, to at least one step of aqueous extraction of said treated grape stalks in order to produce said extract of grape stalks.

9. Process for obtaining according to claim 8, **characterized in that** the process comprises at least one step of solubilization in water, in an hydroalcoholic solution or in an alcoholic solution of said treated grape stalks.

10. Process for obtaining according to claim 8 or 9, **characterized in that** the process comprises at least one step of infusing said treated grape stalks.

11. Process for obtaining an extract of grape stalks, **characterized in that** it comprises submitting treated grape stalks, obtained according to the method of treatment of any one of claims 1 to 7, to at least one step of hydrolysis of said treated grape stalks in an acid or basic medium or in the presence of an enzyme in order to produce said extract of grape stalks.

12. Process for obtaining an extract of grape stalks, **characterized in that** it comprises submitting treated grape stalks, obtained according to the method of treatment of any one of claims 1 to 7, to at least one step of infusion or of maceration of said treated grape stalks in oil in order to produce said extract of grape stalks.

13. Composition comprising at least one extract of grape stalks obtained according to the process for obtaining of any one of claims 8 to 12.

14. Use of treated grape stalks, obtained according to the method of treatment of any one of claims 1 to 7, of an extract of grape stalks obtained according to the process of any one of claims 8 to 12 or of a composition according to claim 13 as a food additive, flavour enhancer, aroma compound or dietary supplement in drinks or foods.

15. Use according to claim 14 implemented as part of a method of vinification or of ageing of wine.
